# EUROPÄISCHE PATENTSCHRIFT

(11) **EP 2 931 557 B1**
(45) Veröffentlichungstag und Bekanntmachung des Hinweises auf die Patenterteilung: **23.06.2021**
(21) Anmeldenummer: 13795500.1
(22) Anmeldetag: 26.11.2013
(51) Int. Cl.: F21S 43/247, B60Q 3/64, B60Q 3/80

(54) **BELEUCHTUNGSEINRICHTUNG FÜR EIN KRAFTFAHRZEUG**
LIGHTING DEVICE FOR A MOTOR VEHICLE
DISPOSITIF D'ÉCLAIRAGE POUR UN VÉHICULE AUTOMOBILE

(30) Priorität: 11.12.2012 DE 102012222684
(43) Veröffentlichungstag der Anmeldung: 21.10.2015
(73) Patentinhaber: Bayerische Motoren Werke Aktiengesellschaft, 80809 München (DE)
(72) Erfinder: GOCKE, Tim, 80796 München (DE)
(86) Internationale Anmeldenummer: PCT/EP2013/074675
(87) Internationale Veröffentlichungsnummer: WO 2014/090563

(56) Entgegenhaltungen:
- EP-A1- 1 970 250
- EP-A2- 1 270 327
- EP-A2- 2 596 992
- WO-A1-2014/002480
- WO-A2-2013/120124
- DE-A1-102006 059 980
- DE-A1-102010 003 270
- US-A1- 2003 156 422
- US-A1- 2010 302 799
- US-A1- 2011 260 616

## Beschreibung

Die Erfindung betrifft eine Beleuchtungseinrichtung für ein Kraftfahrzeug.

In Kraftfahrzeugen werden heutzutage vermehrt Beleuchtungseinrichtungen mit einer Vielzahl von Lichtquellen verwendet, welche oftmals als LEDs ausgestaltet sind. Dabei können durch die Verwendung einer Vielzahl von LEDs verschiedene visuelle Effekte erzeugt werden. Zum Beispiel kann in einem Fahrtrichtungsanzeiger aus einer Vielzahl von nebeneinander angeordneten LEDs ein Wischeffekt beim Einschalten des Fahrtrichtungsanzeigers durch die aufeinanderfolgende Aktivierung der LEDs erzeugt werden. In Beleuchtungseinrichtungen mit einer Vielzahl von LEDs erweist es sich als nachteilhaft, dass das Erscheinungsbild der Beleuchtungseinrichtung aufgrund der punktförmig strahlenden LEDs inhomogen ist und zudem die LEDs einzeln über eine Vielzahl von Kanälen angesteuert werden müssen.

Das Dokument DE 10 2010 003 270 A1 offenbart einen Lichtleiter, an dessen Stirnseiten Lichtquellen Licht einkoppeln, wobei die Lichtquellen derart gesteuert sind, dass das Licht der Lichtquellen hinsichtlich Farbe und Helligkeit geändert wird.

Aufgabe der Erfindung ist es, eine Beleuchtungseinrichtung für ein Kraftfahrzeug zu schaffen, mit der einfach und effizient Lichteffekte generiert werden können.

Die erfindungsgemäße Beleuchtungseinrichtung, welche für ein Kraftfahrzeug vorgesehen ist, beruht auf Lichtleitertechnik. Sie umfasst einen Lichtleiter zur totalreflektierenden Leitung von Licht zweier Lichtquellen entlang einer Lichtausbreitungsachse, wobei das Licht einer Lichtquelle an einer Einkoppelfläche an einer Stirnseite des Lichtleiters einkoppelbar ist und das Licht der anderen Lichtquelle an einer anderen Stirnseite des Lichtleiters einkoppelbar ist. Im Lichtleiter ist eine entlang der Lichtausbreitungsachse angeordnete Auskoppelfläche zum Auskoppeln von Licht vorgesehen. Das ausgekoppelte Licht tritt dabei an einer entlang der Lichtausbreitungsachse angeordneten Austrittsfläche unter Aufhebung der Totalreflexionsbedingung aus dem Lichtleiter aus.

Die erfindungsgemäße Beleuchtungseinrichtung zeichnet sich dadurch aus, dass der Lichtleiter derart ausgestaltet ist, dass die Lichtintensitätsverteilung des an der Austrittsfläche austretenden Lichts zumindest einer Lichtquelle der beiden Lichtquellen und insbesondere jeder der zwei Lichtquellen einen Gradienten in Ausbreitungsrichtung des Lichts der jeweiligen Lichtquelle aufweist. Das heißt, die Lichtintensität der entsprechenden Lichtquelle an der Austrittsfläche nimmt in Ausbreitungsrichtung des Lichts zu oder ab. Ferner ist eine Steuereinrichtung für die Lichtquellen derart vorgesehen, dass beim Anschalten der Beleuchtungseinrichtung die Lichtquelle in einem vorgegebenen Einschaltzeitintervall aktiviert werden und dabei die Helligkeit zumindest einer Lichtquelle, welche in einer bevorzugten Variante eine Lichtquelle mit dem Gradienten in der Lichtintensitätsverteilung ist, basierend auf einem rampen- und/oder stufenförmigen Verlauf bis zum Erreichen eines vorgegebenen Helligkeitswerts verändert wird. Die Veränderung der Helligkeit in Kombination mit dem Gradienten in der Lichtintensitätsverteilung ist dabei derart ausgestaltet, dass der photometrische Schwerpunkt der Gesamtlichtverteilung, die sich aus den Lichtintensitätsverteilungen der zwei Lichtquellen an der Austrittsfläche ergibt, im Einschaltzeitintervall entlang der Lichtausbreitungsachse hin zu einer der Einkoppelflächen wandert. Der Begriff des rampen- und/oder stufenförmigen Verlaufs ist hier und im Folgenden weit zu verstehen. Insbesondere muss der Anstieg bzw. Abfall der Lichtverteilung gemäß einem rampenförmigen Verlauf nicht zwangsläufig linear sein, sondern kann auch basierend auf einer anderen monoton steigenden bzw. fallenden Funktion erfolgen. Die Länge des Einschaltzeitintervalls kann unterschiedlich gewählt werden und wird vorzugsweise derart festgelegt, dass sie entsprechenden gesetzlichen Anforderungen, z.B. maximal 200 ms für einen Fahrtrichtungsanzeiger, entspricht.

Erfindungsgemäß weist der Lichtleiter zwei separate, über benachbarte Stirnseiten aneinander angrenzende Lichtleitungsabschnitte auf, wobei die Einkoppelflächen an entfernt zueinander angeordneten Stirnseiten der Lichtleitungsabschnitte liegen. Gegebenenfalls kann die Beleuchtungseinrichtung dabei mehrere der erfindungsgemäßen Lichtleiter umfassen.

Erfindungsgemäß nimmt in einem entsprechenden Lichtleiter mit zwei Lichtleitungsabschnitten die Lichtintensitätsverteilung des an der Austrittsfläche austretenden Lichts einer Lichtquelle im entsprechenden Lichtleitungsabschnitt mit zunehmendem Abstand von der Einkoppelfläche ab, wohingegen die Lichtintensitätsverteilung des an der Austrittsfläche austretenden Lichts der anderen Lichtquelle im entsprechenden Lichtleitungsabschnitt mit zunehmendem Abstand von der Einkoppelfläche zunimmt. Dabei ist die Steuereinrichtung für die Lichtquellen derart ausgestaltet, dass am Ende des Einschaltzeitintervalls die Gesamtlichtverteilung, die sich aus den Lichtintensitätsverteilungen der zwei Lichtquellen an der Austrittsfläche ergibt, einen kontinuierlichen Verlauf über die benachbarten Stirnseiten hinweg aufweist. Auf diese Weise wird einem Betrachter suggeriert, dass die Lichtverteilung mit einem durchgehenden Lichtleitungsabschnitt erzeugt ist.

Mit der erfindungsgemäßen Beleuchtungseinrichtung kann unter Verwendung von Lichtleitertechnik und lediglich zwei Lichtquellen auf einfache Weise eine Verschiebung des photometrischen Schwerpunkts der Lichtverteilung und damit ein Lichteffekt beim Anschalten der Beleuchtungseinrichtung erzeugt werden. Wie weiter unten näher beschrieben wird, kann die Beleuchtungseinrichtung z.B. als Fahrtrichtungsanzeiger ausgestaltet sein, so dass durch einen Wischeffekt, der über die Verschiebung des photometrischen Schwerpunkts erzeugt wird, die angezeigte Fahrtrichtung visuell verstärkt wird.

In einer besonders bevorzugten Ausführungsform nimmt die Helligkeit der zumindest einen Lichtquelle basierend auf dem rampen- und/oder stufenförmigen Verlauf zu, wodurch der Effekt eines wandernden Schwerpunkts der Gesamtlichtverteilung besonders gut hervorgehoben wird.

In einer weiteren Ausgestaltung der erfindungsgemäßen Beleuchtungseinrichtung wird beim Anschalten der Beleuchtungseinrichtung die Helligkeit einer Lichtquelle basierend auf dem rampen- und/oder stufenförmigen Verlauf bis zum Erreichen des vorgegebenen Helligkeitswerts verändert, wohingegen die Helligkeit der anderen Lichtquelle im gesamten vorgegebenen Einschaltintervall auf einen konstanten vorgegebenen Helligkeitswert eingestellt wird. In dieser Variante muss lediglich eine der Lichtquelle rampen- bzw. stufenförmig angesteuert werden. Nichtsdestotrotz besteht auch die Möglichkeit, dass die Helligkeit der beiden Lichtquellen basierend auf einem rampen- und/oder stufenförmigen Verlauf verändert wird, wodurch der Effekt des wandernden Schwerpunkts der Gesamtlichtverteilung verstärkt werden kann. Vorzugsweise nimmt dabei die Helligkeit einer Lichtquelle im Einschaltzeitintervall zu, wohingegen die Helligkeit der anderen Lichtquelle abnimmt.

In einer weiteren Variante der erfindungsgemäßen Beleuchtungseinrichtung weisen die zwei Lichtquellen am Ende des Einschaltzeitintervalls unterschiedliche Helligkeitswerte auf. Insbesondere ist der Helligkeitswert einer Lichtquelle 90 % oder weniger und vorzugsweise 80 % oder weniger von dem Helligkeitswert der anderen Lichtquelle.

In einer weiteren nicht erfindungsgemäßen Ausgestaltung der Beleuchtungseinrichtung ist der Lichtleiter als durchgehender Lichtleitungsabschnitt mit zwei Stirnseiten ausgebildet, an denen sich die Einkoppelflächen befinden. Vorzugsweise nimmt dabei die Lichtintensitätsverteilung des an der Austrittsfläche austretenden Lichts einer jeweiligen Lichtquelle mit zunehmendem Abstand von der Einkoppelfläche der jeweiligen Lichtquelle ab. Hierdurch kann besonders gut eine wandernde Bewegung des Schwerpunkts der Gesamtlichtverteilung visualisiert werden.

In einer weiteren bevorzugten Ausgestaltung der erfindungsgemäßen Beleuchtungseinrichtung umfassen die Lichtquellen jeweils eine oder mehrere Halbleiterdioden und insbesondere eine oder mehrere Laserdioden.

Die erfindungsgemäße Beleuchtungsvorrichtung kann verschiedene Funktionalitäten im Fahrzeug übernehmen und insbesondere als Signalleuchte und/oder als Fahrzeuginnenraumbeleuchtung und/oder als Scheinwerfer ausgestaltet sein. In einer besonders bevorzugten Variante umfasst die Beleuchtungseinrichtung einen Fahrtrichtungsanzeiger. Dieser Fahrtrichtungsanzeiger ist dabei im eingebauten Zustand im Kraftfahrzeug vorzugsweise derart betreibbar, dass sich der Schwerpunkt der Gesamtlichtverteilung, die sich aus den Lichtintensitätsverteilungen der zwei Lichtquellen an der Austrittsfläche ergibt, im vorgegebenen Einschaltzeitintervall zu einer Einkoppelfläche verschiebt, welche bei Ansicht des Kraftfahrzeugs von vorne oder von hinten (je nachdem, ob der Fahrtrichtungsanzeiger im Front- oder Heckbereich angeordnet ist) näher an einer zum Fahrtrichtungsanzeiger benachbarten seitlichen Begrenzung des Kraftfahrzeugs liegt. Auf diese Weise wird ein Wischeffekt hin zu der Abbiegerichtung des Fahrtrichtungsanzeigers realisiert.

In einer Variante der erfindungsgemäßen Beleuchtungseinrichtung mit einem Lichtleiter aus zwei getrennten Lichtleitungsabschnitten ist die Beleuchtungseinrichtung zum Einbau in einem Kraftfahrzeug derart vorgesehen, dass die Lichtleitungsabschnitte in zwei verschiedenen Fahrzeugbereichen angeordnet sind, wobei der eine Fahrzeugbereich gegenüber dem anderen Fahrzeugbereich beweglich ist und die Fahrzeugbereiche derart zueinander positioniert werden können, dass die Lichtleitungsabschnitte über deren benachbarte Stirnseiten aneinander angrenzen. Auf diese Weise kann eine variable Anordnung der Beleuchtungseinrichtung in verschiedenen zueinander beweglichen Fahrzeugteilen erreicht werden. Insbesondere kann z.B. ein Lichtleitungsabschnitt in einer beweglichen Heckklappe und der andere Lichtleitungsabschnitt in einem daran angrenzenden festen Bereich im Heck vorgesehen sein.

Neben der oben beschriebenen Beleuchtungseinrichtung betrifft die Erfindung ferner ein Kraftfahrzeug, welches eine oder mehrere der erfindungsgemäßen Beleuchtungseinrichtungen umfasst.

Ausführungsbeispiele der Erfindung werden nachfolgend anhand der beigefügten Figuren detailliert beschrieben.

Es zeigen:
- Fig. 1: eine schematische Darstellung einer ersten nicht zur Erfindung gehörigen Ausführungsform einer Beleuchtungseinrichtung;
- Fig. 2: eine schematische Darstellung einer zweiten erfindungsgemäßen Ausführungsform einer Beleuchtungseinrichtung; und
- Fig. 3: Diagramme, welche die Lichtverteilung in dem Lichtleiter der Fig. 2 während des Einschaltvorgangs der Beleuchtungseinrichtung wiedergeben.

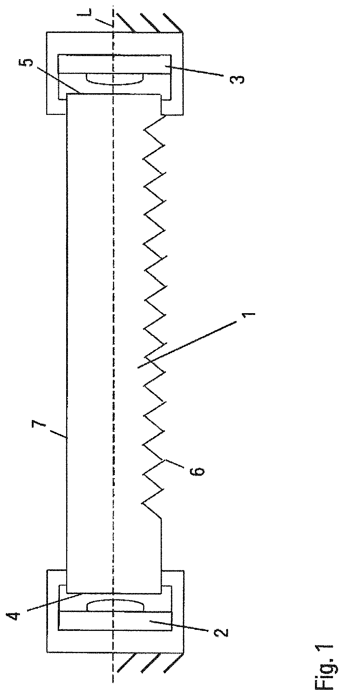

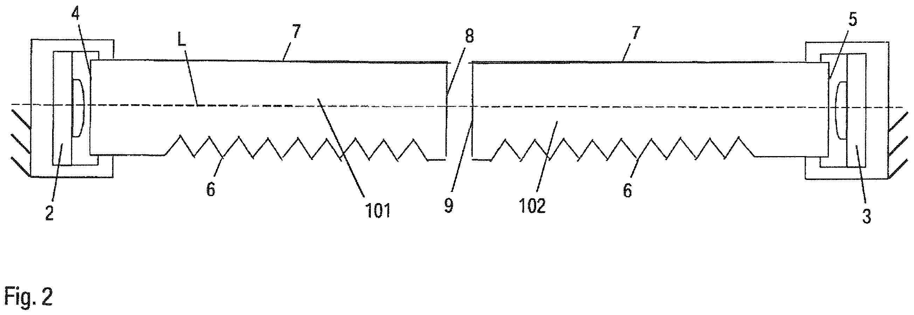

Fig. 1 zeigt eine erste Ausführungsform einer Beleuchtungseinrichtung für ein Kraftfahrzeug, wie z.B. einen PKW oder LKW. Die Beleuchtungseinrichtung der Fig. 1 sowie auch der weiter unten beschriebenen Fig. 2 stellt dabei einen Fahrtrichtungsanzeiger (auch als Blinker bezeichnet) dar. Der Blinker erstreckt sich von rechts nach links vom Fahrzeuginneren hin zu einer seitlichen Fahrzeugbegrenzung. Gegebenenfalls kann die Beleuchtungseinrichtung auch andere Funktionen im Fahrzeug übernehmen, z.B. kann sie Teil eines Scheinwerfers bzw. einer anderen Signalleuchte als des Fahrtrichtungsanzeigers sein. Ebenso kann sie eine Innenraumbeleuchtung im Fahrzeug darstellen.

Die Beleuchtungseinrichtung der Fig. 1 umfasst einen stabförmigen Lichtleiter 1 mit zylindrischem und gegebenenfalls auch rechteckigem Querschnitt, der aus PMMA (PMMA = Polymethylmetacrylat) gebildet ist und sich entlang einer Lichtausbreitungsachse L erstreckt. Am linken Ende des Lichtleiters ist eine LED 2 vorgesehen, welche über die Einkoppelfläche 4 an der Stirnseite des Lichtleiters Licht in den Lichtleiter einspeist. Analog ist am anderen Ende des Lichtleiters eine weitere LED 3 vorgesehen, welche über die Einkoppelfläche 5 an der entgegengesetzten Stirnseite des Lichtleiters ebenfalls Licht in den Lichtleiter einspeist. In der hier beschriebenen Ausführungsform senden die LEDs monochromatisches Licht im gelben Bereich aus, wodurch der Fahrtrichtungsanzeiger bei der Aktivierung gelb aufleuchtet. Das Licht der beiden LEDs 2 und 3 wird im Lichtleiter mittels Totalreflexion an den Flächen 6 und 7 geleitet, wobei über die untere Auskoppelfläche 6 kontinuierlich ein Teil des Lichts entlang seiner Ausbreitungsrichtung ausgekoppelt wird. Die Auskopplung erfolgt über eine Streuung bzw. Reflexion an der Fläche 6, welche eine geeignete Auskoppelstruktur aufweist. Dabei wird Licht an der Auskoppelstruktur derart abgelenkt, dass es mit einem Winkel kleiner als dem Totalreflexionswinkel auf die gegenüberliegende Austrittsfläche 7 trifft und somit aus dem Lichtleiter austritt. Als Auskoppelstruktur kann in der Auskoppelfläche 6 in an sich bekannter Weise z.B. eine Prismenanordnung oder eine aufgeraute Oberfläche verwendet werden.

In der hier beschriebenen Ausführungsform der Beleuchtungseinrichtung werden die Lichtquellen bzw. LEDs 2 und 3 mittels einer (nicht gezeigten) Steuereinrichtung derart angesteuert, dass im Rahmen des Einschaltvorgangs des Fahrtrichtungsanzeigers eine Wischbewegung erzeugt wird, indem sich der photometrische Schwerpunkt der über die Austrittsfläche austretenden Lichtverteilung von der Einkoppelfläche 5 hin zur Einkoppelfläche 4 bewegt. Die Ansteuerung erfolgt innerhalb eines Einschaltzeitintervalls von 200 ms, was den gesetzlichen Anforderungen an die Dauer für das Einschalten eines Fahrtrichtungsanzeigers entspricht. Die Auskoppelfläche 6 des Lichtleiters ist dabei derart ausgestaltet, dass die Intensität sowohl des in die Einkoppelfläche 4 als auch des in die Einkoppelfläche 5 einstrahlten Lichts in Ausbreitungsrichtung entlang des Lichtleiters abnimmt. Das heißt, die Lichtintensität des über die Austrittsfläche 7 austretenden Lichts der LED 2 nimmt von der Einkoppelfläche 4 hin zur Einkoppelfläche 5 ab. Analog nimmt die Lichtintensität des über die Austrittsfläche 7 austretenden Lichts der LED 3 von der Einkoppelfläche 5 hin zur Einkoppelfläche 4 ab. Die Ausbildung entsprechender Auskoppelstrukturen zur Erzeugung einer derartigen abnehmenden Lichtverteilung ist dabei an sich aus dem Stand der Technik bekannt.

Im Rahmen des Einschaltens der Beleuchtungseinrichtung der Fig. 1 wird die LED 3 unmittelbar auf einen vorgegebenen Leistungswert und damit einem vorgegebenen Helligkeitswert geschaltet, z.B. auf 80 % der maximalen Leistung der LED. Im Unterschied hierzu wird die LED 2, welche die gleiche Leistung wie die LED 3 aufweist, innerhalb des Einschaltzeitintervalls über eine Rampe derart angesteuert, dass die elektrische Leistung der LED kontinuierlich von 0 % bis auf 100 % am Ende des Einschaltzeitintervalls nach 200 ms zunimmt. Am Ende des Einschaltzeitintervalls weist somit die LED 2 eine größere Helligkeit als die LED 3 auf. Durch den rampenförmige Ansteuerung der LED 2 bewegt sich der Schwerpunkt der Lichtverteilung von der Einkoppelfläche 5 zu Beginn des Einschaltvorgangs hin zu der Einkoppelfläche 4, wobei am Ende des Einschaltvorgangs aufgrund der stärker leuchtenden LED 2 die maximale Helligkeit des Fahrtrichtungsanzeigers im Bereich der linken Einkoppelfläche 4 liegt. Durch das Wandern des Schwerpunkts der Lichtverteilung wird einem Betrachter ein wischender Effekt vermittelt, wodurch der Abbiegewunsch beim Einschalten des Blinkers visuell hervorgehoben wird. Zur Verstärkung des Wischeffekts kann gegebenenfalls auch die LED 3 über eine Rampe angesteuert werden, wobei in diesem Fall die LED z.B. zunächst auf 100 % ihrer Leistung eingestellt wird und dann bis zum Ende des Einschaltzeitintervalls auf 80 % ihrer Leistung zurückgedimmt wird.

Fig. 2 zeigt eine zweite erfindungsgemäße Ausführungsform einer Beleuchtungseinrichtung, welche wiederum als Fahrtrichtungsanzeiger ausgestaltet ist. Im Unterschied zur Beleuchtungseinrichtung der Fig. 1 ist der Lichtleiter nunmehr nicht mehr als durchgehender Lichtleitungsabschnitt ausgestaltet, sondern umfasst zwei getrennte Lichtleitungsabschnitte 101 und 102, welche an benachbarten Stirnseiten 8 und 9 aneinander grenzen. Das in den jeweiligen Lichtleitungsabschnitten geleitete Licht gelangt aufgrund der Trennung des Lichtleiters nicht von dem einen Lichtleitungsabschnitt in den anderen. Die Beleuchtungseinrichtung der Fig. 2 ist dabei für das Heck eines Kraftfahrzeugs vorgesehen, wobei der Lichtleitungsabschnitt 102 mit zugeordneter LED 3 in der Heckklappe und der Lichtleitungsabschnitt 101 mit zugeordneter LED 2 in einem nicht beweglichen Teil des Hecks angeordnet ist, das sich hin zu der Seitenbegrenzung des Fahrzeugs erstreckt. Fig. 2 zeigt die Beleuchtungseinrichtung bei geschlossener Heckklappe. In diesem Zustand wird das Erscheinungsbild eines durchgehenden Fahrtrichtungsanzeigers vermittelt, der sich über die Grenze zwischen Heckklappe und restlichem Heck erstreckt.

In Analogie zu Fig. 1 umfassen die einzelnen Lichtleitungsabschnitte 101 und 102 wiederum eine entsprechende Auskoppelfläche 6 sowie eine Lichtaustrittsfläche 7, so dass in den Lichtleitungsabschnitten geleitetes Licht mittels der Auskoppelfläche auskoppelt und unter Aufhebung von Totalreflexionsbedingung über die Austrittsfläche 7 austritt. Die LEDs 2 und 3 sind analog zu Fig. 1 ausgestaltet und koppeln ihr Licht über die Einkoppelfläche 4 bzw. die Einkoppelfläche 5 in den Lichtleitungsabschnitt 101 bzw. 102 ein. Die Auskoppelfläche 6 des Lichtleitungsabschnitts 101 ist derart ausgestaltet, dass die Intensität des über die Fläche 7 austretenden Lichts von der Einkoppelfläche 4 hin zur Stirnseite 8 abnimmt. Im Unterschied hierzu ist die Auskoppelfläche 6 des Lichtleitungsabschnitts 102 derart ausgebildet, dass die Intensität des austretenden Lichts im Bereich der Stirnfläche 9 am größten ist, d.h. die Lichtintensität nimmt von der Einkoppelfläche 5 hin zur Stirnfläche 9 ab.

Zur Erzeugung eines Wischeffekts wird wiederum innerhalb des Einschaltzeitintervalls die elektrische Leistung der LED 2 basierend auf einem rampenförmigen Verlauf bis auf einen vorgegebenen Leistungswert erhöht, der in der hier beschriebenen Ausführungsform bei 100 % liegt. Demgegenüber wird die LED 3 direkt auf 100 % ihrer Leistung geschaltet. Dabei ist zu beachten, dass die Auskoppelflächen 6 der beiden Lichtleitungsabschnitte 101 und 102 derart ausgestaltet sind, dass dann, wenn beide LEDs auf 100 % ihrer Leistung betrieben werden, die Lichtintensitäten im Bereich der Stirnseiten 8 und 9 in beiden Lichtleitungsabschnitten gleich groß sind, so dass bei eingeschaltetem Blinker insgesamt ein kontinuierlicher Verlauf der Lichtverteilung über die Stirnseiten 8 und 9 hinweg erreicht wird.

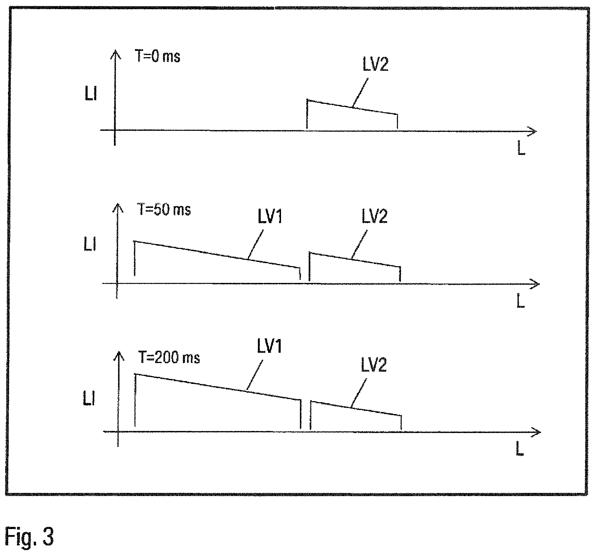

Fig. 3 verdeutlicht nochmals die Ansteuerung der beiden LEDs 2 und 3 im Rahmen des Anschaltens des Blinkers der Fig. 2. Fig. 3 zeigt für die Anschaltzeitpunkte T = 0 ms (oberes Diagramm), T = 50 ms (mittleres Diagramm) und T = 200 ms (unteres Diagramm) die sich entlang der Lichtausbreitungsachse L ergebende Lichtintensität LI des über die Austrittsfläche 7 austretenden Lichts. Die Abszisse der Diagramme erstreckt sich dabei von der Einkoppelfläche 4 hin zur Einkoppelfläche 5. Mit LV1 ist die Lichtverteilung im Lichtleitungsabschnitt 101 und mit LV2 die Lichtverteilung im Lichtleitungsabschnitt 102 bezeichnet. Zum Anschaltzeitpunkt T = 0 ms wird die LED 3 sofort auf eine konstante elektrische Leistung und damit einen vorgegebenen Helligkeitswert geschaltet. Aufgrund der Ausgestaltung der Auskoppelfläche im Lichtleitungsabschnitt 102 nimmt die Lichtintensität LV2 in Richtung hin zur Stirnfläche 9 zu. Zum Zeitpunkt T = 0 ms liegt die Leistung der LED 2 aufgrund der rampenförmigen Ansteuerung noch im Wesentlichen bei Null, so dass sich noch keine Lichtverteilung im Lichtleitungsabschnitt 101 ausgebildet hat.

Die Lichtintensität im Lichtleitungsabschnitt 101 steigt anschließend kontinuierlich mit zunehmender Zeit an, wie durch das mittlere und das untere Diagramm der Fig. 3 ersichtlich wird. Aufgrund der Struktur der Auskoppelfläche im Lichtleitungsabschnitt 101 nimmt die Lichtintensität dabei örtlich von der Einkoppelfläche 4 hin zur Stirnseite 8 ab. Im Unterschied zur Lichtverteilung LV1 bleibt die Lichtverteilung LV2 im Lichtleitungsabschnitt 102 zeitlich unverändert. Zum Ende des Einschaltvorgangs T = 200 ms ist die Helligkeit der LED 2 auf einen Wert eingestellt, so dass sich trotz der Trennung des Lichtleiters in zwei Lichtleitungsabschnitte ein kontinuierlich ansteigender Verlauf der Lichtverteilung von der Einkoppelfläche 5 hin zur Einkoppelfläche 4 ergibt, wodurch für den Betrachter der Eindruck entsteht, dass der Lichtleiter einen zusammenhängenden Lichtleitungsabschnitt bildet. Wie aus Fig. 3 ersichtlich wird, erzeugt der Anstieg der Lichtintensität im Lichtleitungsabschnitt 101 eine Verschiebung des photometrischen Schwerpunkts der Gesamtlichtverteilung hin zu der Einkoppelfläche 4, so dass eine Wischbewegung hin zur Abbiegerichtung des Blinkers erzeugt wird. Auf diese Weise wird die Fahrtrichtungsanzeige des Blinkers nochmals visuell hervorgehoben.

Die im Vorangegangenen beschriebenen Ausführungsformen weisen eine Reihe von Vorteilen auf. Insbesondere wird auf einfache Weise basierend auf Lichtleitertechnik ein Wischeffekt in einer Beleuchtungseinrichtung realisiert. Hierdurch kann das Erscheinungsbild eines wischenden Fahrtrichtungsanzeigers bzw. Blinkers erzeugt werden. Der Wischeffekt kann dabei durch die Verwendung von lediglich zwei Lichtquellen bzw. LEDs mit einer entsprechenden Ansteuerung erreicht werden.

### Bezugszeichenliste

- 1: Lichtleiter
- 101, 102: Lichtleitungsabschnitte
- 2, 3: LEDs
- 4,5: Einkoppelflächen
- 6: Auskoppelfläche
- 7: Austrittsfläche
- L: Lichtausbreitungsachse
- LI: Lichtintensität
- LV1, LV2: Lichtintensitätsverteilungen
- T: Zeit

## Patentansprüche

1. Beleuchtungseinrichtung für ein Kraftfahrzeug, umfassend einen Lichtleiter (1) zur totalreflektierenden Leitung von Licht zweier Lichtquellen (2, 3) entlang einer Lichtausbreitungsachse (L), wobei das Licht einer Lichtquelle (2) an einer Einkoppelfläche (4) an einer Stirnseite des Lichtleiters (1) einkoppelbar ist und das Licht der anderen Lichtquelle (3) an einer anderen Einkoppelfläche (5) an einer anderen Stirnseite des Lichtleiters (1) einkoppelbar ist, mit einer entlang der Lichtausbreitungsachse (L) angeordneten Auskoppelfläche (6) zum Auskoppeln von Licht, welches an einer entlang der Lichtausbreitungsachse angeordneten Austrittsfläche (7) unter Aufhebung der Totalreflexionsbedingung aus dem Lichtleiter (1) austritt,
und eine Steuereinrichtung für die Lichtquellen (2, 3) zur Helligkeitsänderung basierend auf einem rampen- und/oder stufenförmigen Verlauf,
**dadurch gekennzeichnet, dass**
der Lichtleiter (1) derart ausgestaltet ist, dass die Lichtintensitätsverteilung (LV1, LV2) des an der Austrittsfläche (6) austretenden Lichts zumindest einer Lichtquelle (2, 3) einen Gradienten in Ausbreitungsrichtung des Lichts der zumindest einen Lichtquelle (2, 3) aufweist, und die Steuereinrichtung für die Lichtquellen (2, 3) derart vorgesehen ist, dass beim Anschalten der Beleuchtungseinrichtung die Lichtquellen (2, 3) in einem vorgegebenen Einschaltzeitintervall aktiviert werden und dabei die Helligkeit zumindest einer Lichtquelle (2, 3) basierend auf dem rampen- und/oder stufenförmigen Verlauf bis zum Erreichen eines vorgegebenen Helligkeitswerts verändert wird, so dass der photometrische Schwerpunkt der Gesamtlichtverteilung, die sich aus den Lichtintensitätsverteilungen (LV1, LV2) der zwei Lichtquellen (2, 3) an der Austrittsfläche (7) ergibt, im vorgegebenen Einschaltzeitintervall entlang der Lichtausbreitungsachse (L) hin zu einer der Einkoppelflächen (4, 5) wandert;
der Lichtleiter (1) zwei separate, über benachbarte Stirnseiten (8, 9) aneinander angrenzende Lichtleitungsabschnitte (101, 102) aufweist, wobei die Einkoppelflächen (3, 4) an entfernt zueinander angeordneten Stirnseiten der Lichtleitungsabschnitte (101, 102) liegen;
die Lichtintensitätsverteilung (LV1) des an der Austrittsfläche (7) austretenden Lichts einer Lichtquelle (2) im entsprechenden Lichtleitungsabschnitt (101) mit zunehmendem Abstand von der Einkoppelfläche (4) der Lichtquelle (2) abnimmt und die Lichtintensitätsverteilung (LV2) des an der Austrittsfläche (7) austretenden Lichts der anderen Lichtquelle (3) im entsprechenden Lichtleitungsabschnitt (102) mit zunehmendem Abstand von der Einkoppelfläche (5) der anderen Lichtquelle (3) zunimmt;
die Steuereinrichtung für die Lichtquellen (2, 3) derart ausgestaltet ist, dass am Ende des Einschaltzeitintervalls die Gesamtlichtverteilung einen kontinuierlichen Verlauf über die benachbarten Stirnseiten (8, 9) hinweg aufweist.

2. Beleuchtungseinrichtung nach Anspruch 1, **dadurch gekennzeichnet, dass** die Helligkeit der zumindest einen Lichtquelle (2) basierend auf dem rampen- und/oder stufenförmigen Verlauf zunimmt.

3. Beleuchtungsvorrichtung nach Anspruch 1 oder 2, **dadurch gekennzeichnet, dass** beim Anschalten der Beleuchtungseinrichtung die Helligkeit einer Lichtquelle (2, 3) basierend auf dem rampen- und/oder stufenförmigen Verlauf bis zum Erreichen des vorgegebenen Helligkeitswerts verändert wird und die Helligkeit der anderen Lichtquelle (2, 3) im gesamten vorgegebenen Einschaltzeitintervall auf einen konstanten vorgegebenen Helligkeitswert eingestellt wird.

4. Beleuchtungseinrichtung nach Anspruch 1 oder 2, **dadurch gekennzeichnet, dass** die Helligkeit der beiden Lichtquellen (2, 3) basierend auf einem rampen- und/oder stufenförmigen Verlauf verändert wird, wobei vorzugsweise die Helligkeit einer Lichtquelle (2) zunimmt und der anderen Lichtquelle (3) abnimmt.

5. Beleuchtungseinrichtung nach einem der vorhergehenden Ansprüche, **dadurch gekennzeichnet, dass** die zwei Lichtquellen (2, 3) am Ende des Einschaltzeitintervalls unterschiedliche Helligkeitswerte aufweisen.

6. Beleuchtungseinrichtung nach Anspruch 5, **dadurch gekennzeichnet, dass** am Ende des Einschaltzeitintervalls der Helligkeitswert einer Lichtquelle (2, 3) 90% oder weniger und insbesondere 80% oder weniger von dem Helligkeitswert der anderen Lichtquelle (2, 3) beträgt.

7. Beleuchtungseinrichtung nach einem der vorhergehende Ansprüche, **dadurch gekennzeichnet, dass** die Lichtquellen (2, 3) jeweils eine oder mehrere Halbleiderdioden und insbesondere eine oder mehrere Laserdioden umfassen.

8. Beleuchtungseinrichtung nach einem der vorhergehenden Ansprüche, **dadurch gekennzeichnet, dass** die Beleuchtungseinrichtung eine Signalleuchte und/oder eine Fahrzeuginnenraumbeleuchtung und/oder einen Scheinwerfer umfasst.

9. Beleuchtungseinrichtung nach einem der vorhergehenden Ansprüche, **dadurch gekennzeichnet, dass** die Beleuchtungseinrichtung einen Fahrtrichtungsanzeiger umfasst.

10. Beleuchtungseinrichtung nach Anspruch 9, **dadurch gekennzeichnet, dass** der Fahrtrichtungsanzeiger im eingebauten Zustand im Kraftfahrzeug derart betreibbar ist, dass sich der Schwerpunkt der Gesamtlichtverteilung im vorgegebenen Einschaltzeitintervall zu einer Einkoppelfläche (4) verschiebt, welche bei Ansicht des Kraftfahrzeugs von vorne oder von hinten näher an einer zum Fahrtrichtungsanzeiger benachbarten seitlichen Begrenzung des Kraftfahrzeugs liegt.

11. Beleuchtungseinrichtung nach einem der vorhergehenden Ansprüche, **dadurch gekennzeichnet, dass** die Beleuchtungseinrichtung zum Einbau in einem Kraftfahrzeug derart vorgesehen ist, dass die Lichtleitungsabschnitte (101, 102) in zwei unterschiedlichen Fahrzeugbereichen angeordnet sind, wobei der eine Fahrzeugbereich gegenüber dem anderen Fahrzeugbereich beweglich ist und die Fahrzeugbereiche derart zueinander positioniert werden können, dass die Lichtleitungsabschnitte (101, 102) über deren benachbarte Stirnseiten (8, 9) aneinander angrenzen.

12. Kraftfahrzeug, umfassend eine oder mehrere Beleuchtungseinrichtungen nach einem der vorhergehenden Ansprüche.

## Claims

1. Illumination device for a motor vehicle, comprising a light guide (1) for guidance by the total internal reflection of light from two light sources (2, 3) along a light propagation axis (L), wherein the light from one light source (2) is able to be coupled in at a coupling-in face (4) on one end face of the light guide (1) the light from the other light source (3) is able to be coupled in at another coupling-in face (5) on another end face of the light guide (1), having a coupling-out face (6) arranged along the light propagation axis (L) for coupling out light emerging from the light guide (1) at an exit face (7) arranged along the light propagation axis accompanied by cancellation of the total internal reflection condition, and a control device for the light sources (2, 3) for modifying the brightness on the basis of a ramp and/or step profile,
**characterized in that**
the light guide (1) is designed in such a way that the light intensity distribution (LV1, LV2) of the light of at least one light source (2, 3) that emerges at the exit face (6) has a gradient in the propagation direction of the light from the at least one light source (2, 3), and the control device is provided for the light sources (2, 3) in such a way that the light sources (2, 3) are activated in a prescribed switch-on time interval when the illumination device is switched on, and in this case the brightness of at least one light source (2, 3) is modified on the basis of the ramp and/or step profile until a prescribed brightness value is reached, such that the photometric centroid of the overall light distribution resulting at the exit face (7) from the light intensity distributions (LV1, LV2) of the two light sources (2, 3) travels along the light propagation axis (L) to one of the coupling-in faces (4, 5) in the prescribed switch-on time interval;
the light guide (1) has two separate light guide sections (101, 102) adjoining one another via adjacent end faces (8, 9), wherein the coupling-in faces (3, 4) are situated at end faces of the light guide sections (101, 102) that are arranged at a distance from one another;
the light intensity distribution (LV1) of the light of one light source (2) that emerges at the exit face (7), decreases in the corresponding light guide section (101) with increasing distance from the coupling-in face (4) of the light source (2), and the light intensity distribution (LV2) of the light of the other light source (3) that emerges at the exit face (7) increases in the corresponding light guide section (102) with increasing distance from the coupling-in face (5) of the other light source (3);
the control device for the light sources (2, 3) is designed in such a way that the overall light distribution at the end of the switch-on time interval has a continuous profile over the adjacent end faces (8, 9) .

2. Illumination device according to Claim 1, **characterized in that** the brightness of the at least one light source (2) increases on the basis of the ramp and/or step profile.

3. Illumination device according to Claim 1 or 2, **characterized in that** the brightness of a light source (2, 3) when the illumination device is switched on is modified on the basis of the ramp and/or step profile until the prescribed brightness value is reached, and the brightness of the other light source (2, 3) in the entire prescribed switch-on time interval is set to a constant prescribed brightness value.

4. Illumination device according to Claim 1 or 2, **characterized in that** the brightness of the two light sources (2, 3) is modified on the basis of a ramp and/or a step profile, wherein preferably the brightness of one light source (2) increases and that of the other light source (3) decreases.

5. Illumination device according to one of the preceding claims, **characterized in that** the two light sources (2, 3) have different brightness values at the end of the switch-on time interval.

6. Illumination device according to Claim 5, **characterized in that** the brightness value of one light source (2, 3) at the end of the switch-on time interval is 90% or less, and in particular 80% or less, than the brightness value of the other light source (2, 3).

7. Illumination device according to one of the preceding claims, **characterized in that** the light sources (2, 3) respectively comprise one or more semiconductor diodes and, in particular, one or more laser diodes.

8. Illumination device according to one of the preceding claims, **characterized in that** the illumination device comprises a signal light and/or a vehicle interior light and/or a headlight.

9. Illumination device according to one of the preceding claims, **characterized in that** the illumination device comprises an indicator light.

10. Illumination device according to Claim 9, **characterized in that** the indicator light, when installed in the motor vehicle, is operable in such a way that the centroid of the overall light distribution in the prescribed switch-on time interval is displaced to a coupling-in face (4) which is situated closer to a lateral boundary of the motor vehicle adjacent to the indicator light when the motor vehicle is viewed from the front or from the rear.

11. Illumination device according to one of the preceding claims, **characterized in that** the illumination device is provided for installation in a motor vehicle in such a way that the light guide sections (101, 102) are arranged in two different regions of the vehicle, wherein one region of the vehicle is movable relative to the other region of the vehicle and the regions of the vehicle can be positioned relative to one another in such a way that the light guide sections (101, 102) adjoin one another via their adjacent end faces (8, 9).

12. Motor vehicle comprising one or more illumination devices according to one of the preceding claims.

## Revendications

1. Dispositif d'éclairage pour un véhicule automobile, comprenant un guide de lumière (1) pour le guidage par réflexion totale de la lumière de deux sources lumineuses (2, 3) le long d'un axe de propagation de lumière (L), la lumière d'une source lumineuse (2) pouvant être couplée au niveau d'une surface de couplage (4) sur une face frontale du guide de lumière (1), et la lumière de l'autre source lumineuse (3) pouvant être couplée au niveau d'une autre surface de couplage (5) sur une autre face frontale du guide de lumière (1), comprenant une surface de découplage (6), disposée le long de l'axe de propagation de lumière (L), pour découpler de la lumière qui sort du guide de lumière (1) au niveau d'une surface de sortie (7) disposée le long de l'axe de propagation de lumière en supprimant la condition de réflexion totale, et un dispositif de commande pour les sources lumineuses (2, 3), destiné à modifier la luminosité sur la base d'un tracé en forme de rampe et/ou de gradin,
**caractérisé en ce que**
le guide de lumière (1) est configuré de telle sorte que la distribution d'intensité lumineuse (LV1, LV2) de la lumière sortant au niveau de la surface de sortie (6) d'au moins une source lumineuse (2, 3) présente un gradient dans la direction de propagation de la lumière de ladite au moins une source lumineuse (2, 3), et le dispositif de commande pour les sources lumineuses (2, 3) est prévu de telle sorte qu'à la mise en marche du dispositif d'éclairage, les sources lumineuses (2, 3) sont activées dans un intervalle de temps de mise en marche prédéfini, et la luminosité d'au moins une source lumineuse (2, 3) est alors modifiée sur la base du tracé en forme de rampe et/ou de gradin jusqu'à obtention d'une valeur de luminosité prédéfinie de sorte que le centre de gravité photométrique de la distribution de lumière totale, qui résulte des distributions d'intensité lumineuse (LV1, LV2) des deux sources lumineuses (2, 3) à la surface de sortie (7), se déplace dans l'intervalle de temps de mise en marche prédéfini le long de l'axe de propagation de lumière (L) en direction d'une des surfaces de couplage (4, 5) ;
le guide de lumière (1) présente deux parties de guidage de lumière (101, 102) séparées, adjacentes l'une à l'autre par des faces frontales voisines (8, 9), les surfaces de couplage (3, 4) se trouvant sur des faces frontales des parties de guidage de lumière (101, 102), disposées à distance l'une de l'autre, des parties de guidage de lumière (101, 102) ;
la distribution d'intensité lumineuse (LV1) de la lumière sortant à la surface de sortie (7) d'une source lumineuse (2) diminue dans la partie de guidage de lumière (101) correspondante avec une distance croissante par rapport à la surface de couplage (4) de la source lumineuse (2), et la distribution d'intensité lumineuse (LV2) de la lumière sortant à la surface de sortie (7) de l'autre source lumineuse (3) augmente dans la partie de guidage de lumière (102) correspondante avec la distance croissante par rapport à la surface de couplage (5) de l'autre source lumineuse (3) ;
le dispositif de commande pour les sources lumineuses (2, 3) est configuré de telle sorte qu'à la fin de l'intervalle de temps de mise en marche, la distribution de lumière totale présente un tracé continu sur les faces frontales voisines (8, 9).

2. Dispositif d'éclairage selon la revendication 1, **caractérisé en ce que** la luminosité de ladite au moins une source lumineuse (2) augmente sur la base du tracé en forme de rampe et/ou de gradin.

3. Dispositif d'éclairage selon la revendication 1 ou 2, **caractérisé en ce qu'**à la mise en marche du dispositif d'éclairage, la luminosité d'une source lumineuse (2, 3) est modifiée sur la base du tracé en forme de rampe et/ou de gradin jusqu'à obtention de la valeur de luminosité prédéfinie, et la luminosité de l'autre source lumineuse (2, 3) est réglée sur une valeur de luminosité constante dans tout l'intervalle de temps de mise en marche prédéfini.

4. Dispositif d'éclairage selon la revendication 1 ou 2, **caractérisé en ce que** la luminosité des deux sources lumineuses (2, 3) est basée sur un tracé en forme de rampe et/ou de gradin, dans lequel de préférence la luminosité d'une source lumineuse (2) augmente et celle de l'autre source lumineuse (3) diminue.

5. Dispositif d'éclairage selon l'une quelconque des revendications précédentes, **caractérisé en ce que** les deux sources lumineuses (2, 3) présentent différentes valeurs de luminosité à la fin de l'intervalle de temps de mise en marche.

6. Dispositif d'éclairage selon la revendication 5, **caractérisé en ce qu'**à la fin de l'intervalle de temps de mise en marche, la valeur de luminosité d'une source lumineuse (2, 3) est égale à 90 % ou moins, et en particulier à 80 % ou moins, de la valeur de luminosité de l'autre source lumineuse (2, 3).

7. Dispositif d'éclairage selon l'une quelconque des revendications précédentes, **caractérisé en ce que** les sources lumineuses (2, 3) comprennent respectivement une ou plusieurs diodes à semi-conducteur, et en particulier une ou plusieurs diodes laser.

8. Dispositif d'éclairage selon l'une quelconque des revendications précédentes, **caractérisé en ce que** le dispositif d'éclairage comprend un feu de signalisation et/ou un éclairage d'habitacle et/ou un phare.

9. Dispositif d'éclairage selon l'une quelconque des revendications précédentes, **caractérisé en ce que** le dispositif d'éclairage comprend un indicateur de direction.

10. Dispositif d'éclairage selon la revendication 9, **caractérisé en ce que** l'indicateur de direction, à l'état installé dans le véhicule automobile, peut fonctionner de telle sorte que le centre de gravité de la distribution de lumière totale dans l'intervalle de temps de mise en marche prédéfini se décale en direction d'une surface de couplage (4) qui se trouve plus près d'une limite latérale du véhicule automobile, voisine de l'indicateur de direction, lorsque le véhicule automobile est vu de l'avant ou de l'arrière.

11. Dispositif d'éclairage selon l'une quelconque des revendications précédentes, **caractérisé en ce que** le dispositif d'éclairage est prévu pour l'installation dans un véhicule automobile de telle sorte que les parties de guidage de lumière (101, 102) sont disposées dans deux zones de véhicule différentes, ladite une zone de véhicule étant mobile par rapport à l'autre zone de véhicule, et les zones de véhicule pouvant être positionnées l'une par rapport à l'autre de telle sorte que les parties de guidage de lumière (101, 102) sont adjacentes l'une à l'autre par leurs faces frontales voisines (8, 9).

12. Véhicule automobile, comprenant un ou plusieurs dispositifs d'éclairage selon l'une quelconque des revendications précédentes.
